# EUROPÄISCHE PATENTANMELDUNG

(11) **EP 2 011 757 A1**
(43) Veröffentlichungstag der Anmeldung: **07.01.2009**
(21) Anmeldenummer: 08103338.3
(22) Anmeldetag: 02.04.2008
(51) Int. Cl.: B65H 35/00, B23P 19/04

(54) **Setzeinheit und ein Verfahren zur Montage eines Bandes**

(71) Anmelder: Lemuth GmbH, 98617 Meiningen (DE)
(72) Erfinder: Zerr, Horst, 98639, Wallbach (DE)
(74) Vertreter: Liedtke, Markus

(57) **Zusammenfassung**

Die Erfindung betrifft eine Setzeinheit (2) zur Montage eines Bandes (9), insbesondere für einen Montagekopf (1) eines Portals zur Herstellung eines Fensterrahmens (11), aufweisend wenigstens eine Transportrolle (6.1) und eine Klemmeinrichtung (7) zum temporären Fixieren des Bandes (9) in oder an einem Setzkopf (6). Der Setzkopf (6) ist horizontal und vertikal verfahrbar und um eine vertikale Achse drehbar und um eine parallel zu einer Montageebene verlaufende Achse derart drehbar ist, dass zumindest ein Abschnitt des zu montierenden Bandes (9) zumindest temporär in eine Lage parallel zur Montageebene bringbar ist. Die Erfindung betrifft außerdem ein Verfahren zur Montage eines Bandes (9), wobei das Band (9) mittels einer Zuführeinrichtung (3) dem Setzkopf (6) zugeführt wird. Anschließend wird das Band (9) temporär fixiert, der Setzkopf (6) wird gedreht, bis der erste Abschnitt (9.1) parallel zur Montageebene gedreht ist. Anschließend wird der Setzkopf (6) abgesenkt, die Klemmung des Bandes (9) wird gelöst, der Setzkopf (9) wird über der Oberfläche (11.1) verfahren, so dass das Band (9) auf die Oberfläche (11.1) verlegt wird.

## Beschreibung

Die Erfindung betrifft eine Setzeinheit und ein Verfahren zur Montage eines Bandes.

Verfahren zur Montage eines Bandes sind insbesondere im Zusammenhang mit der Herstellung von Fenstern bekannt, wobei insbesondere zweiseitige Klebestreifen, also beidseitig klebende Bänder, in Fensterrahmen eingelegt werden. Derartige beidseitig klebende Bänder werden insbesondere dann umlaufend in Fensterrahmen eingelegt, wenn eine in den Fensterrahmen einzusetzende Scheibe mittels des beidseitig klebenden Bandes mit dem Fensterrahmen verklebt werden soll.

Insbesondere bei Fensterkonstruktionen, deren Fensterrahmen so schlank sind, dass sie nur gemeinsam mit einer fest mit ihr verbundenen Scheibe tragfähig sind, muss ein fester Verbund zwischen Scheibe und Fensterrahmen hergestellt werden. Üblicherweise werden derartige schlanke Holz-Fensterrahmen hergestellt, indem auf einen horizontal liegenden Fensterrahmen ein Acrylat-Kleber aufgetragen wird, die Fensterscheibe eingesetzt wird und anschließend die Aushärtezeit abgewartet wird. Schlanke Kunststoff-Fensterrahmen werden üblicherweise hergestellt, indem auf einen liegenden Fensterrahmen ein elastischer ZweiKomponenten-Silikon-Kleber aufgetragen, die Fensterscheibe eingesetzt und anschließend die Aushärtezeit abgewartet wird. Da die Aushärtezeit von ZweiKomponenten-Silikon-Kleber bis zu 24 Stunden beträgt, werden derartige Kunststoff-Fensterrahmen alternativ auch hergestellt, in dem die Fensterscheibe mittels eines Klebebandes im Fensterrahmen befestigt wird.

Derartige Klebebänder werden beispielsweise manuell in fertige Fensterrahmen eingelegt.

Nachteilig ist dabei, dass diese manuellen bekannten Verfahren sehr zeitaufwändig sind.

Es ist auch bekannt, derartige Klebebänder bereits bei der Herstellung von Leisten für Fensterrahmen gemeinsam mit den Leisten zu fertigen oder diese auf die Leisten aufzulegen und anschließend die Leisten abzulängen und, meist auf Gehrung, zusammen zu fügen.

Nachteilig ist dabei, dass beim Ablängen derartiger Leisten in den Schnittbereichen die Klebebänder eingerissen oder zerstört werden.

Der Erfindung liegt daher die Aufgabe zugrunde, eine verbesserte Vorrichtung und ein verbessertes Verfahren zur Montage eines Bandes anzugeben.

Die Aufgabe wird erfindungsgemäß gelöst durch einen Setzkopf mit den Merkmalen des Anspruchs 1 und ein Verfahren mit den Merkmalen des Anspruchs 7.

Vorteilhafte Ausgestaltungen der Erfindung sind Gegenstand der Unteransprüche.

Eine erfindungsgemäße Setzeinheit zur Montage eines Bandes ist insbesondere für einen Montagekopf eines Portals zur Herstellung eines Fensterrahmens geeignet und weist wenigstens eine Transportrolle und eine Klemmeinrichtung zum temporären Fixieren des Bandes in oder an einem Setzkopf auf. Der Setzkopf, der vorzugsweise unterhalb des Montagekopfes angeordnet ist, ist horizontal verfahrbar, vertikal verfahrbar und um eine vertikale Achse drehbar. Die Angabe der Ausrichtungen horizontal und vertikal basiert auf der Voraussetzung, dass die Montageebene wie üblich horizontal verläuft. Der Setzkopf ist um die vertikale Achse drehbar, indem entweder nur der Setzkopf relativ zur gesamten Setzeinheit oder die gesamte Setzeinheit mit dem Setzkopf drehbar ist. Letztere Alternative ist bevorzugt ausgebildet, da dabei das Band beim Drehen nicht tordiert wird. Der Setzkopf ist um eine parallel zu einer Montageebene verlaufende Achse, also um eine horizontale Achse, drehbar, so dass zumindest ein Abschnitt des zu montierenden Bandes zumindest temporär in eine Lage parallel zur Montageebene bringbar ist. Der erfindungsgemäße Setzkopf ist vorteilhaft, da er es automatisch und auf einfache Weise gestattet, insbesondere ein zweiseitiges Klebeband in fertige Fensterrahmen zu verlegen.

Eine Ausgestaltung des erfindungsgemäßen Setzkopfes sieht vor, dass eine Zuführeinrichtung zum Zuführen des Bandes in den Setzkopf angeordnet ist. Dadurch kann die Zuführung des Bandes automatisch und kontinuierlich erfolgen, so dass eine Vielzahl von Fensterrahmen mit Klebeband belegt werden kann, bevor manuell oder automatisch eine neue Rolle von Klebeband in die Setzeinrichtung gesetzt werden muss.

Eine weitere Ausgestaltung des erfindungsgemäßen Setzkopfes sieht vor, dass eine Schneideinrichtung zum Trennen des Bandes angeordnet ist. Dadurch gelingt es auf einfache Weise, das Band abschnittsweise in korrekter Länge zu trennen und einzelne Schenkel von Fensterrahmen zu belegen.

Eine andere Ausgestaltung des erfindungsgemäßen Setzkopfes sieht vor, dass die Klemmeinrichtung derart in Wirkverbindung mit der ersten Transportrolle angeordnet ist, dass das zu montierende Band zwischen der ersten Transportrolle und einer Kontaktfläche der Klemmeinrichtung temporär fixierbar ist. Vorzugsweise wird dabei das Band zwischen einer Kontaktfläche der Klemmeinrichtung der ersten Transportrolle eingeklemmt.

Eine besonders bevorzugte Ausgestaltung des erfindungsgemäßen Setzkopfes sieht vor, dass eine erste Gruppe von Transportrollen und eine zweite Gruppe von Transportrollen derart an dem Setzkopf angeordnet sind, dass ein im Bereich der ersten Gruppe von Transportrollen mittels der Klemmeinrichtung fixiertes Band bei einer Drehung des Setzkopfes um die parallel zur Montageebene verlaufende Achse in einem ersten Abschnitt eben bleibt und wobei dieser erste Abschnitt dabei in eine Lage parallel zur Montageebene bringbar ist. Die Länge des ersten Abschnittes ist dabei durch die Länge der ersten Gruppe von Transportrollen bestimmt. Dadurch kann das Band zunächst, ausgerichtet auf die Ausdehnung der Oberfläche, auf die es verlegt werden soll, derart auf diese Oberfläche gesetzt werden, dass es anschließend auf einfache Weise auf die Oberfläche aufrollbar ist.

Gemäß einer weiteren Ausgestaltung des erfindungsgemäßen Setzkopfes ist eine Aufwickeleinheit zum Aufwickeln wenigstens eines Liners des Bandes angeordnet. Dadurch kann auf einfache Weise ein Liner, der zunächst auf den Klebeflächen eines Klebebandes angeordnet ist, vom Klebeband abgezogen und definiert aufgerollt werden, sodass das Klebeband klebbar wird.

Bei dem erfindungsgemäßen Verfahren zur Montage eines Bandes mittels einer Setzeinheit, insbesondere zur Montage des Bandes in einen Fensterrahmen mittels eines Montagekopfes eines Portals, wird das Band mittels einer Zuführeinrichtung dem Setzkopf zugeführt. Anschließend wird im Bereich einer ersten Gruppe von im Setzkopf angeordneten Transportrollen mittels einer Klemmeinrichtung das Band temporär fixiert. Anschließend wird erfindungsgemäß der Setzkopf um die parallel zur Montageebene verlaufende Achse gedreht, wobei das fixierte Band in einem von der Länge der ersten Gruppe bestimmten ersten Abschnitt eben bleibt. Die genannte Drehung wird gestoppt, wenn der erste Abschnitt in eine Lage parallel zur Montageebene gedreht ist. Anschließend wird der Setzkopf abgesenkt, bis der erste Abschnitt auf einer mit dem Band zu belegenden Oberfläche aufsetzt. Vorzugsweise wird der erste Abschnitt des Bandes, sofern dieser klebend ist, mit der Oberfläche verklebt oder er wird in sonstiger Weise dort befestigt, beispielsweise in eine Nut gesetzt. Anschließend wird die durch die Klemmeinrichtung des Bandes bewirkte Klemmung gelöst, danach wird der Setzkopf in Richtung des ersten Abschnittes über der Oberfläche parallel zu dieser verfahren, so dass das Band von der ersten Gruppe von Transportrollen auf die Oberfläche gedrückt und so auf dieser verlegt wird. Das erfindungsgemäße Verfahren ermöglicht es automatisch und auf einfache Weise, Klebeband in fertige Fensterrahmen auch dann zu verlegen, wenn wie in Fensterrahmen üblich, die zu verlegende horizontale Oberfläche schlecht zugänglich und insbesondere von vertikalen Flächen begrenzt ist.

Eine besonders bevorzugte Ausgestaltung des erfindungsgemäßen Verfahrens sieht vor, dass das Band mittels einer Schneideinrichtung derart getrennt wird, dass die Länge des durch die Trennung erzeugten, zu verlegenden Abschnittes des Bandes auf die Länge der Oberfläche abgestimmt ist. Dadurch kann in jeden Schenkel eines Fensterrahmens jeweils ein Abschnitt eines Bandes, insbesondere eines Klebebandes, genau abgelängt verlegt werden.

Eine weitere bevorzugte Ausgestaltung des erfindungsgemäßen Setzkopfes sieht vor, dass, wenn als Band ein einseitiges oder ein zweiseitiges Klebeband verwendet wird, an dessen wenigsten einer Klebeseite zunächst ein die Klebefläche schützender Liner angeordnet ist, vor dem Verlegen des Bandes auf die Oberfläche der Liner vom Band abgezogen und aufgewickelt wird. Dies erfolgt vorzugsweise mittels einer Aufwickeleinrichtung.

Eine andere bevorzugte Ausgestaltung des erfindungsgemäßen Setzkopfes sieht vor, dass die Schneideinrichtung gesteuert wird, in dem die Länge des zu verlegenden Abschnitts eines Bandes einstellbar ist und, insbesondere in Abhängigkeit von den Schenkelabmessungen des zu belegenden Fensterrahmens, vorbestimmt wird. Alternativ wird die Schneideinrichtung gesteuert, indem die Länge des zu verlegenden Abschnitts eines Bandes durch Vermessung der Länge der zu belegenden Oberfläche ermittelt wird. Dadurch wird die genaue Länge des zu verlegenden Abschnitts des Bandes genau auf die erforderliche Länge abstimmbar. Dadurch sind insbesondere Eckbereiche von Fensterrahmen sehr sauber auf Kante mit Klebeband belegbar.

Die erfindungsgemäße Vorrichtung ist insbesondere für Durchführung der Verfahren gemäß den Ansprüchen 7 bis 10 geeignet.

Ausführungsbeispiele der Erfindung werden im Folgenden anhand von Zeichnungen näher erläutert.

Darin zeigen:
- Figur 1: eine Schnittdarstellung einer ersten Ausführungsform eines Fensterrahmens,
- Figur 2: eine Schnittdarstellung einer zweiten Ausführungsform eines Fensterrahmens,
- Figur 3: eine Schnittdarstellung einer dritten Ausführungsform eines Fensterrahmens,
- Figur 4: eine Ansicht einer ersten Ausführungsform eines Fensterrahmens,
- Figur 5: eine Ansicht einer zweiten Ausführungsform eines Fensterrahmens,
- Figur 6: eine Ansicht einer ersten Ausführungsform einer erfindungsgemäßen Setzeinheit in einem ersten Verfahrensschritt,
- Figur 7: eine zugehörige perspektivische Ansicht für einen weiteren Verfahrensschritt und
- Figur 8: eine perspektivische Ansicht der ersten Ausführungsform einer erfindungsgemäßen Setzeinheit in einem späteren Verfahrensschritt.

Einander entsprechende Teile sind in allen Figuren mit den gleichen Bezugszeichen versehen.

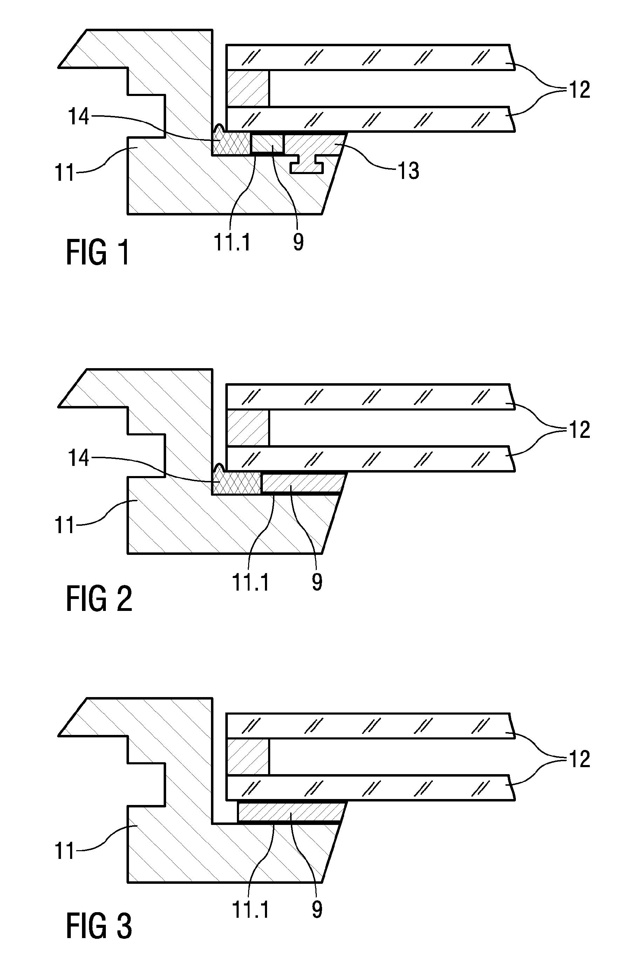

**Figur 1** zeigt eine Schnittdarstellung einer ersten Ausführungsform eines Fensterrahmens 11 mit einer Oberfläche 11.1, auf die ein als zweiseitiges Klebeband ausgebildetes Band 9 und eine Dichtung 13 aufgebracht sind, wobei die Dichtung 13 in eine Nut eingedrückt ist. Links neben dem Band 9, mit dem eine Glasscheibe 12 temporär befestigt wurde, ist ein Kleber 14 dargestellt, der die dauerhafte Verbindung zwischen Fensterrahmen 11 und Glasscheibe 12 bewirkt.
**Figur 2** zeigt eine Schnittdarstellung einer zweiten Ausführungsform des Fensterrahmens 11 mit der Oberfläche 11.1, auf die das als zweiseitiges Klebeband ausgebildete Band 9 aufgebracht ist, das neben seiner Klebefunktion auch die Funktion einer Dichtung übernimmt. Links neben dem Band 9, mit dem die Glasscheibe 12 temporär befestigt wurde, ist der Kleber 14 dargestellt, der die dauerhafte Verbindung zwischen Fensterrahmen 11 und Glasscheibe 12 bewirkt.
In **Figur 3** ist eine Schnittdarstellung einer dritten Ausführungsform des Fensterrahmens 11 mit der Oberfläche 11.1 gezeigt, auf die das als zweiseitiges Klebeband ausgebildete Band 9 aufgebracht ist, das neben seiner Klebefunktion auch die Funktion der Dichtung übernimmt. Das Band 9 dient der dauerhaften Verbindung zwischen Fensterrahmen 11 und Glasscheibe 12.

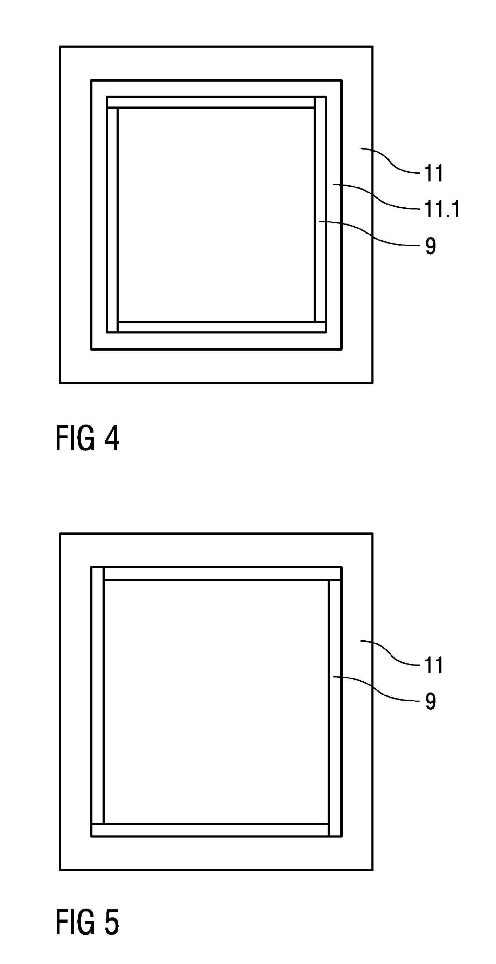

**Figur 4** zeigt eine zu Figur 2 gehörende Ansicht eines Fensterrahmens 11, auf dessen zu belegende Oberfläche 11.1 in deren innerem Randbereich das Band 9 verklebt ist.
**Figur 5** zeigt eine Ansicht eines Fensterrahmens 11, auf dessen zu belegende Oberfläche 11.1 auf deren gesamter Breite das Band 9 verklebt ist.

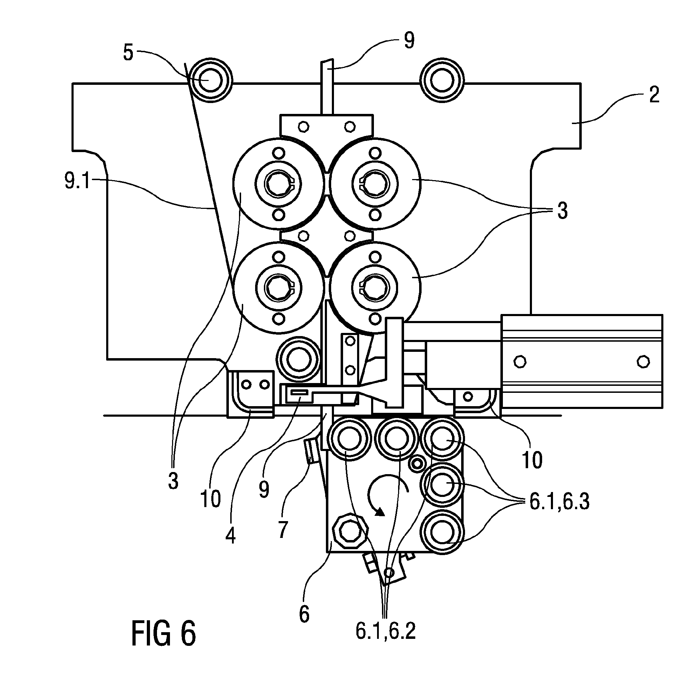

**Figur 6** zeigt eine Ansicht einer ersten Ausführungsform einer erfindungsgemäßen Setzeinheit 2 in einem ersten Verfahrensschritt. Das als zweiseitiges Klebeband ausgebildete Band 9 wird mittels zweier korrespondierender Paare jeweils zweier Treibräder, die eine Zuführeinrichtung 3 bilden, von oben nach unten zu einem Setzkopf 6 transportiert. Am Setzkopf 6 sind oben drei Transportrollen 6.1 angeordnet, die eine erste Gruppe 6.1 von Transportrollen 6.1 bilden. Auf der rechts dargestellten Seite des Setzkopfes 6 sind zwei weitere Transportrollen 6.1 angeordnet, die gemeinsam mit der rechts oben gezeigten Transportrolle 6.1 eine zweite Gruppe 6.2 von Transportrollen 6.1 bilden. Links neben der links oben dargestellten Transportrolle 6.1 ist eine Klemmeinrichtung 7 gezeigt, die derart in Richtung der links oben dargestellten Transportrolle 6.1 schwenkbar ist, dass das Ende des Bandes 9 zwischen einer Kontaktfläche der Klemmeinrichtung 7 und der links oben dargestellten Transportrolle 6.1 einklemmbar ist. das Band 9, das im oben dargestellten Abschnitt noch beidseitig mit jeweils einem die Klebfläche schützenden Liner 9.1 dargestellt ist, wird im Verlauf des Verfahrens von den Linern 9.1 befreit, in dem diese von den jeweils unteren Rollen der Zuführeinrichtung 3 umgelenkt auf eine oben dargestellte Aufwickeleinrichtung 5, die von zwei Rollen gebildet wird, aufgewickelt werden. Der Setzkopf 6 ist um die horizontale Achse drehbar; die Drehrichtung ist mit einem Pfeil symbolisiert. Mit einer Laserschranke 10 ist detektierbar, ob sich ein Band 8 im Bereich des Setzkopfes 6 befindet. Oberhalb des Setzkopfes 6 ist eine Schneideinrichtung 4 zum Abtrennen von Abschnitten bestimmter Länge des Bandes 9 angeordnet.

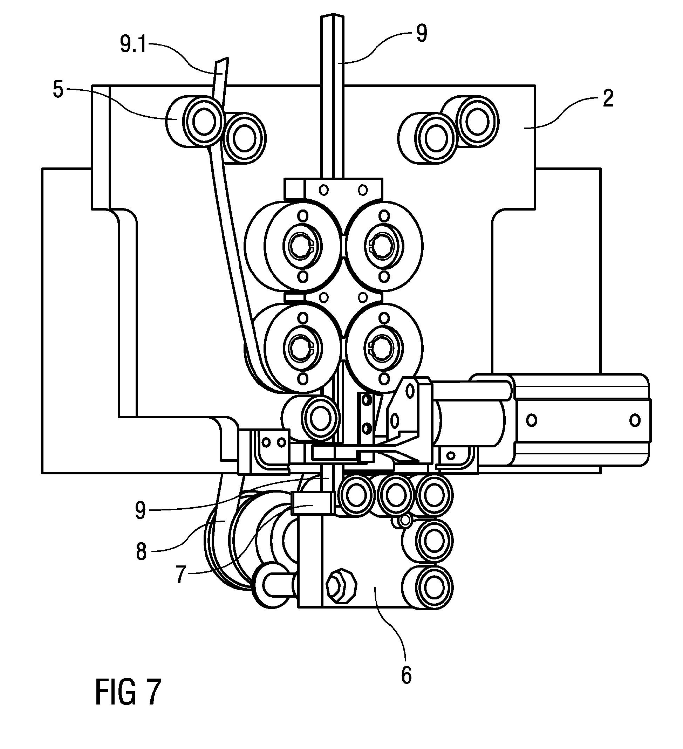

**Figur 7** zeigt eine weitere Ansicht dieser ersten Ausführungsform der erfindungsgemäßen Setzeinheit 2 in einem weiteren Verfahrensschritt, in dem das untere Ende des Bandes 9 bereits mittels der Klemmeinrichtung 7 zwischen der Kontaktfläche der Klemmeinrichtung 7 und der links oben dargestellten Transportrolle 6.1 eingeklemmt ist. Hinter dem Setzkopf 6 ist die zu dessen Drehung um die horizontale Achse vorgesehene Dreheinrichtung 8 gezeigt.

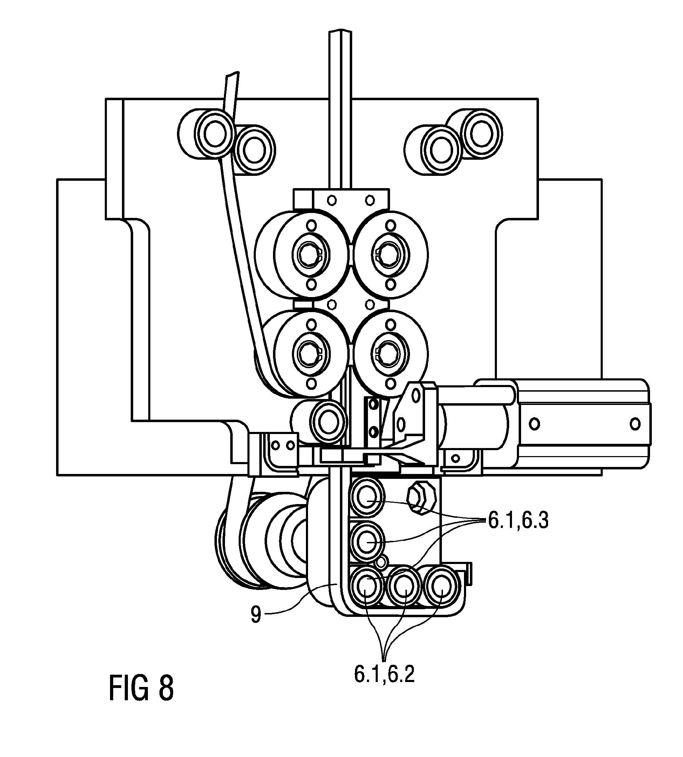

**Figur 8** zeigt eine weitere Ansicht dieser Ausführungsform der erfindungsgemäßen Setzeinheit 2 in einem weiteren Verfahrensschritt. Das untere Ende des Bandes 9 ist noch immer mittels der Klemmeinrichtung 7 zwischen der Kontaktfläche der Klemmeinrichtung 7 und korrespondierenden Transportrolle 6.1 eingeklemmt. Der Setzkopf 6, einschließlich der Transportrollen 6.1, und der an ihm befestigten Klemmeinrichtung 7 sind mittels einer Dreheinrichtung 8 um 180° um die horizontale Achse gedreht, so dass unterhalb der ersten Gruppe 6.1 von Transportrollen 6 ein erster Abschnitt des Bandes 9, das von den Linern befreit ist, horizontal verläuft. Damit das beidseitig klebende Band 9 nicht an den Transportrollen 6.1 haftet, sind diese mit einer Antihaftbeschichtung versehen. In der dargstellten Lage wird der Setzkopf 6 gemeinsam mit der Setzeinheit 2 in einem Eckbereich eines Fensterrahmens 11 abgesetzt, so dass der unterhalb der ersten Gruppe 6.1 von Transportrollen 6 verlaufende erste Abschnitt des Bandes 9 derart auf eine hier nicht dargestellte Oberfläche gesetzt wird und damit verklebt, dass nach Lösen der Klemmeinrichtung 7 das dadurch frei gewordene Ende des Bandes bis zum Ende der zu belegenden Oberfläche 11.1, wie in den Figuren 4 oder 5 gezeigt, verlegbar ist. Anschließend verfährt der Setzkopf nach links bis zum gegenüberliegenden Ende der zu belegenden Oberfläche 11.1, ebenfalls wie in den Figuren 4 oder 5 gezeigt. Vor dem Erreichen des gegenüberliegenden Endes der Oberfläche 11.1 wird mittels der Schneideinrichtung 4 das Band 9 an der Stelle abgeschnitten, dass beim Erreichen dieses gegenüberliegenden Endes der Oberfläche 11.1 das abgetrennte Ende des Bandes 9 genau am Ende der zu belegenden Oberfläche 11.1 abgelegt wird.

Nach Erreichen des Endes der Oberfläche 11.1 in der beschriebenen Weise wird der Setzkopf 6 angehoben, um 90° um die vertikale Achse gedreht und fährt den nächsten Schenkel des mit dem Band 9 zu belegenden Fensterrahmens 11 an.

### BEZUGSZEICHENLISTE

- 1: Montagekopf
- 2: Setzeinheit
- 3: Zuführeinrichtung
- 4: Schneideinrichtung
- 5: Aufwickeleinrichtung
- 6: Setzkopf

- 6.1: Transportrolle
- 6.2: erste Gruppe
- 6.3: zweite Gruppe

- 7: Klemmeinrichtung
- 8: Dreheinrichtung
- 9: Band

- 9.1: Liner

- 10: Lichtschranke
- 11: Fensterrahmen

- 11.1: Oberfläche

- 12: Glasscheibe
- 13: Dichtung
- 14: Kleber

## Patentansprüche

1. Setzeinheit (2) zur Montage eines Bandes (9), insbesondere für einen Montagekopf (1) eines Portals zur Herstellung eines Fensterrahmens (11), aufweisend wenigstens eine Transportrolle (6.1) und eine Klemmeinrichtung (7) zum temporären Fixieren des Bandes (9) in oder an einem Setzkopf (6), wobei der Setzkopf (6) horizontal verfahrbar, vertikal verfahrbar und um eine vertikale Achse drehbar ist und wobei der Setzkopf (6) um eine parallel zu einer Montageebene verlaufende Achse derart drehbar ist, dass zumindest ein Abschnitt des zu montierenden Bandes (9) zumindest temporär in eine Lage parallel zur Montageebene bringbar ist.

2. Setzeinheit (2) nach Anspruch 1, **dadurch gekennzeichnet, dass** eine Zuführeinrichtung (3) zum Zuführen des Bandes (9) in den Setzkopf (6) angeordnet ist.

3. Setzeinheit (2) nach Anspruch 1 oder 2, **dadurch gekennzeichnet, dass** eine Schneideinrichtung (4) zum Trennen des Bandes (9) angeordnet ist.

4. Setzeinheit (2) nach einem der vorhergehenden Ansprüche, **dadurch gekennzeichnet, dass** die Klemmeinrichtung (7) derart in Wirkverbindung mit der ersten Transportrolle (6.1) angeordnet ist, dass das zu montierende Band (9) zwischen der ersten Transportrolle (6.1) und einer Kontaktfläche der Klemmeinrichtung (7) temporär fixierbar ist.

5. Setzeinheit (2) nach einem der vorhergehenden Ansprüche, **dadurch gekennzeichnet, dass** eine erste Gruppe (6.2) von Transportrollen (6.1) und eine zweite Gruppe (6.3) von Transportrollen (6.1) derart an dem Setzkopf (6) angeordnet sind, dass ein im Bereich der erste Gruppe (6.2) von Transportrollen (6.1) mittels der Klemmeinrichtung (7) fixiertes Band (9) bei einer Drehung des Setzkopfes (6) um die parallel zur Montageebene verlaufende Achse in einem ersten Abschnitt (9.1) eben bleibt und wobei dieser erste Abschnitt (9.1) dabei in eine Lage parallel zur Montageebene bringbar ist.

6. Setzeinheit (2) nach einem der vorhergehenden Ansprüche, **dadurch gekennzeichnet, dass** eine Aufwickeleinheit (5) zum Aufwickeln wenigstens eines Liners (9.1) des Bandes (9) angeordnet ist.

7. Verfahren zur Montage eines Bandes (9) mittels einer Setzeinheit (2), insbesondere zur Montage des Bandes (9) in einen Fensterrahmen (11) mittels eines Montagekopfes (1) eines Portals, wobei das Band (9) mittels einer Zuführeinrichtung (3) dem Setzkopf (6) zugeführt wird,
wobei anschließend im Bereich einer ersten Gruppe (6.2) von im Setzkopf (6) angeordneten Transportrollen (6.1) mittels einer Klemmeinrichtung (7) das Band (9) temporär fixiert wird,
wobei anschließend der Setzkopf (6) um die parallel zur Montageebene verlaufende Achse gedreht wird, wobei das fixierte Band (9) in einem ersten Abschnitt (9.1) eben bleibt,
wobei diese Drehung gestoppt wird, wenn dieser erste Abschnitt (9.1) in eine Lage parallel zur Montageebene gedreht ist,
wobei anschließend der Setzkopf (6) abgesenkt wird, bis der erste Abschnitt (9.1) auf einer mit dem Band (9) zu belegenden Oberfläche (11.1) aufsetzt,
wobei anschließend die Klemmeinrichtung (7) die Klemmung des Bandes (9) löst,
und wobei anschließend der Setzkopf (9) in Richtung des ersten Abschnittes (9.1) über der Oberfläche (11.1) parallel zu dieser verfahren wird, so dass das Band (9) von der ersten Gruppe (6.2) von Transportrollen (6.1) auf die Oberfläche (11.1) gedrückt und so auf dieser verlegt wird.

8. Verfahren nach Anspruch 7, **dadurch gekennzeichnet, dass** das Band (9) mittels einer Schneideinrichtung (4) derart getrennt wird, dass die Länge des durch die Trennung erzeugten, zu verlegenden Abschnittes des Bandes (9) auf die Länge der Oberfläche (11.1) abgestimmt ist.

9. Verfahren nach Anspruch 7 oder 8, **dadurch gekennzeichnet, dass** als Band ein einseitiges oder ein zweiseitiges Klebeband verwendet wird und dass wenigstens eine Klebeseite des Bandes (9) zunächst mit einem Liner (9.1) versehen ist, der vor dem Verlegen des Bandes (9) auf die Oberfläche (11.1) vom Band (9) abgezogen und mittels einer Aufwickeleinrichtung (5) aufgewickelt wird.

10. Verfahren nach einem der Ansprüche 8 bis 9, **dadurch gekennzeichnet, dass** die Schneideinrichtung (4) gesteuert wird, in dem die Länge des zu verlegenden Abschnitts eines Bandes (9) einstellbar ist und vorbestimmt wird oder indem die Länge des zu verlegenden Abschnitts eines Bandes (9) durch Vermessung der Länge der zu belegenden Oberfläche (11.1) ermittelt wird.
